(19) **Europäisches Patentamt**

**European Patent Office**

**Office européen des brevets**

(11) **EP 1 264 459 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(21) Anmeldenummer: **01921305.7**

(22) Anmeldetag: **02.03.2001**

(51) Int Cl.$^7$: **H04L 27/36**

(86) Internationale Anmeldenummer:
**PCT/EP2001/002390**

(87) Internationale Veröffentlichungsnummer:
**WO 2001/069880 (20.09.2001 Gazette 2001/38)**

(54) **I/Q-MODULATOR MIT TRÄGERVORVERZERRUNG**

I/Q MODULATOR WITH CARRIER PREDISTORTION

MODULATEUR I/Q AVEC PREDISTORSION DE PORTEUSE

(84) Benannte Vertragsstaaten:
**DE FI FR GB SE**

(30) Priorität: **15.03.2000 DE 10012539**

(43) Veröffentlichungstag der Anmeldung:
**11.12.2002 Patentblatt 2002/50**

(73) Patentinhaber: **Fraunhofer-Gesellschaft zur Förderung der angewandten Forschung e.V. 80686 München (DE)**

(72) Erfinder:
- **GAMM, Eberhard 91052 Erlangen (DE)**
- **RETKOWSKI, Reiner 91054 Erlangen (DE)**
- **ULBRICHT, Gerald 90552 Röthenbach (DE)**
- **GERHÄUSER, Heinz 91344 Waischenfeld (DE)**

(74) Vertreter: **Schoppe, Fritz Patentanwälte Schoppe, Zimmermann, Stöckeler & Zinkler Postfach 246 82043 Pullach bei München (DE)**

(56) Entgegenhaltungen:
**WO-A-00/31881          DE-A- 19 631 388**

- **GHADERI M ET AL: "ADAPTIVE PREDISTORTION LINEARISER USING POLYNOMIAL FUNCTIONS" IEE PROCEEDINGS: COMMUNICATIONS,INSTITUTION OF ELECTRICAL ENGINEERS,GB, Bd. 141, Nr. 2, PART I, 1. April 1994 (1994-04-01), Seiten 49-55, XP000450830 ISSN: 1350-2425**

**Beschreibung**

Die vorliegende Erfindung bezieht sich auf einen I/Q-Modulator mit Trägervorverzerrung.

Herkömmliche I/Q-Modulatoren werden in Sendeeinrichtungen für trägerfrequente Übertragungssysteme, z. B. Sendern für den digitalen Rundfunk und in Basisstationen für die Mobilkommunikation, eingesetzt.

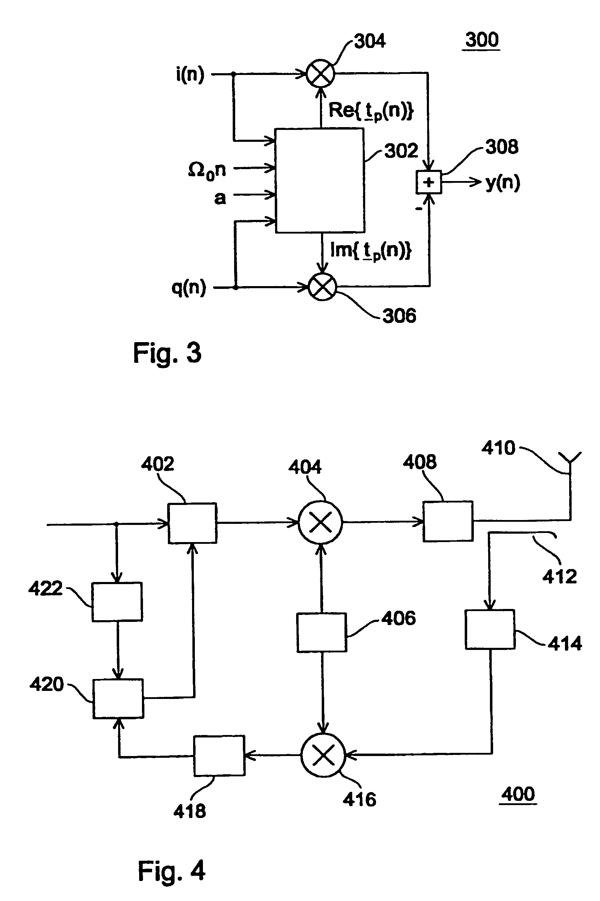

Ein Beispiel einer derartigen Sendeeinrichtung ist in Fig. 4 gezeigt. Die Sendeeinrichtung 400 umfaßt einen I/Q-Modulator mit Vorverzerrung 402, der einen ersten Eingang, der mit dem Eingang der Sendeeinrichtung 400 verbunden ist, und einen Ausgang aufweist. An dem ersten Eingang des I/Q-Modulators ist ein I/Q-Signal angelegt. Der Ausgang des I/Q-Modulators ist mit einem ersten Eingang eines ersten Mischers 404 verbunden. Ein zweiter Eingang 404 des Mischers ist mit einem Oszillator 406 verbunden. Ein Ausgang des Mischers 404 ist mit einem Eingang eines Verstärkers 408 verbunden. Ein Ausgang des Verstärkers 408 ist mit einer. Antenne 410 verbunden. Zwischen dem Verstärker 408 und der Antenne 410 ist eine Auskopplungseinrichtung 412 angeordnet, die mit einem Dämpfungsglied 414 verbunden ist. Ein Ausgang des Dämpfungsglieds 414 ist mit einem ersten Eingang eines zweiten Mischers 416 verbunden. Ein zweiter Eingang des zweiten Mischers 416 ist ebenfalls mit dem Oszillator 406 verbunden. Ein Ausgang des Mischers 416 ist mit einem Eingang eines I/Q-Demodulators 418 verbunden. Ein Ausgang des I/Q-Demodulators 418 ist mit einem ersten Eingang einer Vergleichseinrichtung 420 verbunden. Ein zweiter Eingang der Vergleichseinrichtung 420 ist mit einem Ausgang eines Verzögerungsglieds 422 verbunden. Ein Ausgang der Vergleichseinrichtung 420 ist mit einem zweiten Eingang des I/Q-Modulators 402 verbunden. Ein Eingang des Verzögerungsglieds 422 ist mit dem ersten Eingang des I/Q-Modulators 402 bzw. mit dem Eingang der Sendeeinrichtung 400 verbunden.

Die Auskoppelungseinrichtung 412, das Dämpfungsglied 414, der zweite Mischer 416, der I/Q-Demodulator 418 und die Vergleichseinrichtung 420 bilden eine Rückführung zur Bestimmung der Verzerrungsparameter.

Im folgenden ist kurz die Funktionsweise der Sendeeinrichtung gemäß Fig. 4 beschrieben. Ein I/Q-Signal, das beispielsweise ein nachrichtentragendes Basisbandsignal ist, wird durch den I/Q-Modulator auf ein Trägersignal moduliert. Um beispielsweise Verzerrungen des ersten Mischers 404 und des Verstärkers 408 zu kompensieren, führt der I/Q-Modulator ferner eine Vorverzerrung des I/Q-Signals durch. Dies ist insbesondere bei der Verwendung von Sendesignalen mit nicht konstanter Einhüllender wichtig, die auftritt, wenn z. B. amplitudenmodulierte Signale anstatt frequenzmodulierter Signale verwendet werden, um eine höhere spektrale Effizienz des Modulationsverfahrens zu erreichen. Die nicht konstante Einhüllende des Sendesignals verursacht in Verbindung mit den Nichtlinearitäten des ersten Mischers 404 und des Verstärkers 408 Störungen außerhalb des Nutzfrequenzbandes. Diese Störungen werden Nachbarkanalaussendung genannt und dürfen typischerweise einen anwendungsspezifischen Grenzwert nicht überschreiten.

Das vorverzerrte Ausgangssignal des I/Q-Modulators 402 läuft in den ersten Mischer 404, in dem das Signal mit Hilfe des Oszillators 406 aufwärts gemischt wird. Das aufwärts gemischte Signal wird dann durch den Verstärker, z. B. eine Wanderfeldröhre, verstärkt, und auf die Antenne 410 geschickt und ausgesendet.

Ein Teil des über die Antenne 410 gesendeten Signals wird vorher durch die Auskopplungseinrichtung 412 abgezweigt und für eine weitere Verarbeitung durch das Dämpfungsglied 414, um die Verstärkung des Verstärkers rückgängig zu machen, gedämpft. Das abgezweigte gedämpfte Signal läuft in den zweiten Mischer 416, um abwärts gemischt zu werden und das abwärts gemischte Signal läuft dann in den I/Q-Demodulator, um in ein I/Q-Signal demoduliert zu werden. Das demodulierte I/Q-Signal trägt jetzt die Informationen über die Verzerrung des ursprünglichen I/Q-Signals durch z. B. den ersten Mischer 404 und den Verstärker 408. Wird dieses I/Q-Signal der Vergleichseinrichtung 420 zugeführt, so liefert der Vergleich des ursprünglichen I/Q-Signals mit dem demodulierten verzerrten I/Q-signal eine Information darüber, wie die Vorverzerrung des I/Q-Modulators 402 gewählt werden muß, so daß die Verzerrungen durch den ersten Mischer 404 und den Verstärker 408 optimal ausgeglichen werden können.

Ein wichtiges Merkmal für den Vergleich ist dabei, daß das ursprüngliche I/Q-Signal durch das Verzögerungsglied 422 vor dem Vergleich in der Vergleichseinrichtung 420 zeitlich verzögert wird, damit das ursprüngliche I/Q-Signal tatsächlich jenes Signal ist, welcher das vorverzerrte I/Q-Signal bewirkt hat. Dieses Verfahren des von einem Vergleich abhängenden Einstellens der Vorverzerrung des I/Q-Modulators 402 wird adaptive Vorverzerrung genannt.

Ein Beispiel einer derartigen adaptiven Vorverzerrung ist in der US 5,049,832 beschrieben. Die US 5,049,832 offenbart eine Verstärkerlinearisierung einer Verstärkerschaltung durch adaptive Vorverzerrung, bei der ein Eingangssignal für einen Leistungsverstärker der Verstärkerschaltung aus einem Eingangsmodulationssignal der Verstärkerschaltung durch Vorverzerrung abgeleitet wird, d. h. das Eingangssignal des Leistungsverstärkers ist vorverzerrt, um zu erreichen, daß dasselbe durch den Leistungsverstärker linear verstärkt wird.

Die Vorverzerrung des Eingangsmodulationssignals wird dabei über eine Tabelle, die abhängig vom Amplitudenquadrat des Eingangsmodulationssignals adressiert wird, eingestellt, wobei die Inhalte der Tabelle fortdauernd aktualisiert werden, um Variationen der Verzerrung des Leistungsverstärkers bei der Vorverzerrung durch den I/Q-Modulator zu berücksichtigen.

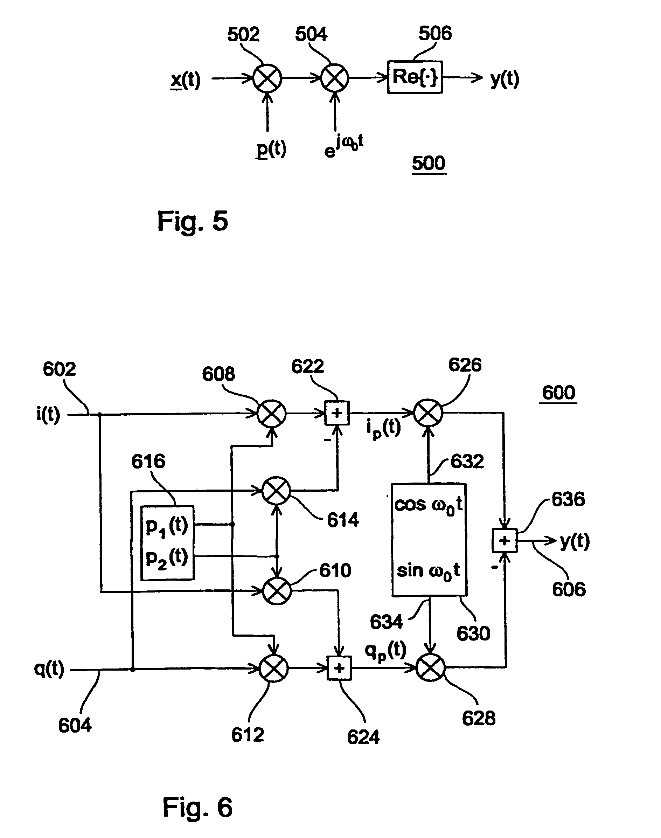

Im folgenden ist ein herkömmlicher I/Q-Modulator mit Vorverzerrung beschrieben. Fig. 5 zeigt unter Verwendung von komplex dargestellten Signalen das Prinzip eines I/Q-Modulators 500 mit Vorverzerrung des I/Q-signals. Der I/Q-Modulator 500 weist einen ersten Multiplizierer 502 auf, der mit einem zweiten Multiplizierer 504 verbunden ist. Der zweite Multiplizierer 504 ist mit einem Glied 506 zum Bilden des Realteils verbunden.

An einem ersten Eingang des ersten Multiplizierers 502 ist ein komplexes I/Q-Signal bzw. ein Basisbandsignal angelegt, das eine I- und eine Q-Komponente aufweist:

$$\underline{x}(t) = i(t) + jq(t) \qquad\qquad \text{Glg. 1}$$

An einem zweiten Eingang des ersten Multiplizierers 502 ist ein komplexes Vorverzerrungssignal angelegt.

$$\underline{p}(t) = p_1(t) + jp_2(t) \qquad\qquad \text{Glg. 2}$$

Der Multiplizierer 502 multipliziert das I/Q-Signal mit dem Vorverzerrungssignal und liefert an einem Ausgang ein vorverzerrtes I/Q-Signal.

$$\underline{x}_p(t) = \underline{x}(t) \cdot \underline{p}(t) \qquad\qquad \text{Glg. 3}$$

Der Realteil und der im Imaginärteil des vorvezerrten I/Q-Signals besitzten folgende Form:

$$i_p(t) = \mathrm{Re}\{\underline{x}_p(t)\} = i(t) \cdot p_1(t) - q(t) \cdot p_2(t) \qquad\qquad \text{Glg. 4}$$

$$q_p(t) = \mathrm{Im}\{\underline{x}_p(t)\} = i(t) \cdot p_2(t) + q(t) \cdot p_1(t) \qquad\qquad \text{Glg. 5}$$

Das vorverzerrte I/Q-signal wird in einen ersten Eingang des zweiten Multiplizierers 504 gespeist und mit einem an einem zweiten Eingang anliegenden Trägersignal multipliziert und dadurch auf einen Träger mit einer Kreisfrequenz omega$_0$ aufgebracht, um ein komplexes Ausgangssignal an einem Ausgang des zweiten Multiplizierers 504 zu erzeugen. Das komplexe Ausgangssignal wird in das Glied 506 zum Bilden des Realteils gespeist, um ein reelles Ausgangssignal an einem Ausgang des Glieds 506 zum Bilden des Realteils zu liefern.

$$y(t) = \mathrm{Re}\{\underline{x}_p(t) \cdot e^{j\omega_0 t}\} = i_p(t) \cdot \cos\omega_0 t - q_p(t) \cdot \sin\omega_0 t \qquad\qquad \text{Glg. 6}$$

Wie aus den Gleichungen 4 und 5 sichtbar ist, werden zur Berechnung des vorverzerrten I/Q-Signals 4 Multiplikationen, d. h. in einer Schaltung 4 Multiplizierer, benötigt. Ferner werden zur Multiplikation des Trägersignals mit dem vorverzerrten I/Q-Signal, wie aus Gleichung 6 sichtbar, 2 Multiplikationen, d. h. zwei Multiplizierer, benötigt. Eine schaltungstechnische Realisierung des I/Q-Modulators nach Fig. 5 mit Vorverzerrung des I/Q-Signals erfordert folglich 6 Multiplizierer.

Fig. 6 zeigt einen herkömmlichen I/Q-Modulator 600 mit Vorverzerrung des I/Q-Signals bzw. Vorverzerrung des Basisbandsignals. Der I/Q-Modulator weist einen ersten Eingang 602 und einen zweiten Eingang 604 und einen Ausgang 606 auf. Der erste Eingang 602 ist mit einem ersten Eingang eines ersten Multiplizierers 608 und einem ersten Eingang eines zweiten Multiplizierers 610 verbunden. Der zweite Eingang 604 des I/Q-Modulators 600 ist mit einem ersten Eingang eines dritten Multiplizierers 612 und einem ersten Eingang eines vierten Multiplizierers 614 verbunden. Ein zweiter Eingang des ersten Multiplizierers 608 und ein zweiter Eingang des dritten Multiplizierers 612 sind mit einem ersten Ausgang 618 einer Einrichtung 616 zum Erzeugen eines Vorverzerrungssignals verbunden. Ein zweiter Eingang des zweiten Multiplizierers 610 und ein zweiter Eingang des vierten Multiplizierers 614 sind mit einem zweiten Ausgang 620 der Einrichtung 616 zum Erzeugen eines Vorverzerrungssignals verbunden. Ein Ausgang des ersten Multiplizierers 608 ist mit einem ersten Eingang eines ersten Addierers 622 verbunden. Ein Ausgang des vierten Multiplizierers 614 ist mit einem zweiten Eingang des ersten Addierers 622 verbunden. Ein Ausgang des zweiten Multiplizierers 610 ist mit einem ersten Eingang eines zweiten Addierers 624 verbunden und ein Ausgang des dritten Multiplizierers 612 ist mit einem zweiten Eingang des zweiten Addierers 624 verbunden.

Ein Ausgang des ersten Addierers 622 ist mit einem ersten Eingang eines fünften Multiplizierers 626 verbunden und ein Ausgang des zweiten Addierers 624 ist mit einem ersten Eingang eines sechsten Mulitplizierers 628 verbunden. Ein zweiter Eingang des fünften Multiplizierers 626 ist mit einem ersten Ausgang 632 einer Einrichtung 630 zum Erzeugen eines Trägersignals verbunden. Ein zweiter Eingang des sechsten Multiplizierers 628 ist mit einem zweiten Ausgang 634 der Einrichtung 630 zum Erzeugen eines Trägersignals verbunden.

Ein Ausgang des fünften Multiplizierers 626 ist mit einem ersten Eingang eines dritten Addierers 636 verbunden. Ein Ausgang des sechsten Multiplizierers 628 ist mit einem invertierenden zweiten Eingang des dritten Addierers 636 verbunden. Ein Ausgang des dritten Addierers 636 ist der Ausgang 606 des I/Q-Modulators.

Im folgenden ist kurz die Funktionsweise des I/Q-Modulators 600 mit Vorverzerrung des I/Q-signals gemäß Fig. 6 beschrieben. Am ersten Eingang 602 des I/Q-Modulators 600 liegt die I-Komponente bzw. der Realteil des I/Q-Signals an, und am zweiten Eingang 604 des I/Q-Modulators 600 liegt die Q-Komponente bzw. der Imaginärteil des I/Q-Signals an.

Am ersten Ausgang 618 der Einrichtung 616 zum Erzeugen des Vorverzerrungssignals liegt der Realteil $p_1$(t) eines Vorverzerrungssignals $\underline{p}$(t) an. Am zweiten Ausgang 620 der Einrichtung 616 zum Erzeugen eines vorverzerrungssignals $\underline{p}$(t) liegt der Imaginärteil $p_2$(t) des Vorverzerrungssignals an.

Der erste Multiplizierer 608 führt die erste Multiplikation der Gleichung 4 aus. Der vierte Multiplizierer 614 führt die zweite Multiplikation der Gleichung 4 aus. Folglich bildet der erste Addierer 622 die Summe der Gleichung 4, um schließlich den Realteil $ip$(t) des vorverzerrten I/Q-Signals $\underline{x}_p$(t) zu erhalten. Der zweite Multiplizierer 610 führt die erste Multiplikation der Gleichung 5 aus. Der dritte Multiplizierer 612 führt die zweite Multiplikation der Gleichung 5 aus. Folglich bildet der zweite Addierer 624 die Summe von Gleichung 5, um den Imaginärteil $q_p$(t) des vorverzerrten I/Q-Signals $\underline{x}_p$(t) zu erzeugen.

Am ersten Ausgang 632 der Einrichtung 630 zum Erzeugen eines Trägersignals liegt eine erste Teilkomponente, hier der Realteil des Trägersignals an, die z. B. eine cos-Funktion ist. Am zweiten Ausgang 634 der Einrichtung zum Erzeugen des Trägersignals 630 liegt eine zweite Teilkomponente, hier der Imaginärteil des Trägersignals, an, die eine zur ersten Teilkomponente im wesentlichen orthogonale Teilkomponente, wie z. B. eine sin-Funktion, ist.

Der fünfte Multiplizierer 626 führt folglich die erste Multiplikation der Gleichung 6 aus, während der sechste Multiplizierer 628 die zweite Multiplikation der Gleichung 6 ausführt. Schließlich bildet der dritte Addierer 636 die Differenz der Gleichung 6, um das reelle Ausgangssignal y(t) am Ausgang 606 des I/Q-Modulators zu erzeugen.

Bei modernen Sendeeinrichtungen werden die Vorverzerrung und die I/Q-Modulation digital durchgeführt. Aufgrund der hohen Bandbreite und der hohen Genauigkeitsanforderungen neuer Übertragungsverfahren, wie z. B. W-CDMA (W-CDMA = Wideband Code-Division Multiple Access = Codemultiplex-Vielfachzugriff), werden dazu schnelle digitale Multiplizierer mit hoher Auflösung, typischerweise 14 bit, benötigt.

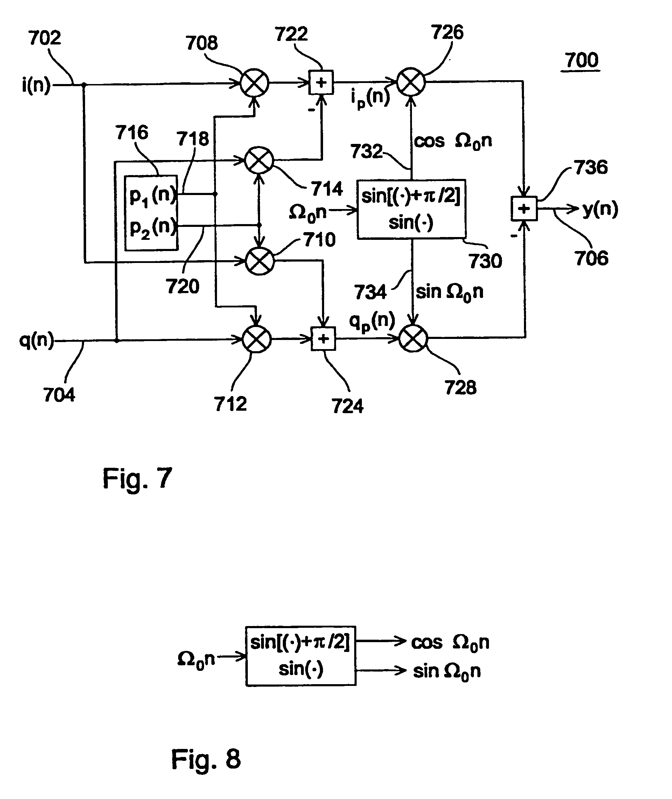

Fig. 7 zeigt eine zeitdiskrete bzw. digitale Realisierung des herkömmlichen I/Q-Modulators mit Vorverzerrung des I/Q-Signals von Fig. 6. Das I/Q-signal, das Trägersignal, das Vorverzerrungssignal und das Ausgangssignal werden durch Abtastwerte in einem Abstand $T_A$ = 1/$f_A$ dargestellt. $f_A$ ist die Abtastrate, wobei t = n·$T_A$ und $\Omega_0$ = omega$_0$·$T_A$. n ist dabei der Abtastparameter. Aus den Gleichungen 4, 5 und 6 erhält man

$$i_p(n) = i(n) \cdot p_1(n) - q(n) \cdot p_2(n) \qquad \text{Glg. 7}$$

$$q_p(n) = i(n) \cdot p_2(n) + q(n) \cdot p_1(n) \qquad \text{Glg. 8}$$

$$y(n) = i_p(n) \cdot \cos\Omega_0 n - q_p(n) \cdot \sin\Omega_0 n \qquad \text{Glg. 9}$$

Die Einrichtung 730 zum Erzeugen eines Trägersignals ist jetzt z. B. ein numerischer Oszillator (NCO), wie er in Fig. 8 gezeigt ist. Der numerische Oszillator besteht aus einem Phasenakkumulator, der die Phase $\Omega_0$n bildet und einer Sinustabelle, die mit der Phase adressiert wird. Die zwei orthogonalen Teilkomponenten des Trägersignals werden am ersten Ausgang 732 und am zweiten Ausgang 734 der Einrichtung 730 zum Erzeugen eines Trägersignals geliefert. Die erste Teilkomponente des Trägersignals ist hier die sin-Funktion, aus der sich leicht im numerischen Oszillator die zweite Teilkomponente, die cos-Funktion, durch Phasenverschiebung um eine Viertelperiode $\pi$/2 berechnen läßt.

Ein Nachteil des herkömmlichen digitalen I/Q-Modulators mit Vorverzerrung des I/Q-Signals besteht darin, daß 6 schnelle digitale Multiplizierer mit hoher Auflösung zur Verarbeitung des I/Q-Signals benötigt werden.

Für eine Realisierung folgt daraus eine hohe Gatteranzahl und eine hohe Leistungsaufnahme.

Die DE 198 32 116 A 1 offenbart ein Verfahren zum linearen Vorverzerren eines digitalisierten Signals, wobei das Signal mit Hilfe eines Multiträgerverfahrens übertragen werden soll und die bei dem Multiträgerverfahren verwendeten, das Trägerspektrum bildenden Trägerfrequenzen mit Korrekturwerten beaufschlagt werden.

Die DE 196 21 388 C 2 offenbart ein Verfahren zum Vorverzerren eines über eine nichtlineare Übertragungsstrecke zu übertragenden Signals und eine Schaltungsanordnung zum Durchführen des Verfahrens. Die Hüllkurve eines Signals wird erfasst, woraufhin quantisierte Hüllkurvenwerte gebildet werden. Daraufhin werden komplexe Vorverzerrungskoeffizienten gebildet, die von den quantisierten Hüllkurvenwerten und von einer vorab erfaßten Übertragungsfunktion der nichtlinearen Übertragungsstrecke abhängen, woraufhin ein komplexes Bewerten der über die nichtlineare Übertragungsstrecke zu übertragenden Signale mit den komplexen Vorverzerrungskoeffizienten stattfindet, so daß die durch die nichtlineare Übertragungsstrecke verursachte Verzerrung nach Betrag und Phase weitgehend kompensiert ist.

Die DE 36 43 689 A 1 offenbart ein Verfahren und eine Anordnung zur digitalen Vorverzerrung von 16-QAM-Signalen. Zur Kompensation von übertragungsbedingten Verzerrungen der digitalen quaternären Basisbandsignale einer Übertragung mittels 16-QAM-Verfahrens wird die Symbol-Impulsdauer in eine Anzahl von n Stützstellen unterteilt. Ein Optimierungsverfahren liefert die den tatsächlichen Kanaleigenschaften angepaßten Amplitudenwerte der Stützstellen. Die Amplitudenwerte werden als Koeffizienten in Festwertspeichern abgelegt und zur Vorverzerrung eines Sendesignals in einem QAM-Modulator verwendet.

Die Aufgabe der vorliegenden Erfindung besteht darin, einen vereinfachten I/Q-Modulator und ein vereinfachtes Verfahren zum Verarbeiten eines I/Q-Signals zu schaffen.

Diese Aufgabe wird durch einen I/Q-Modulator zum Verarbeiten eines I/Q-Signals gemäß Anspruch 1 und ein Verfahren zum Verarbeiten eines I/Q-Signals gemäß Anspruch 11 gelöst.

Der Erfindung liegt die Erkenntnis zugrunde, daß durch ein Vorverzerren des Trägersignals anstatt des I/Q-Signals bzw. des Basisbandsignals eine wesentliche Vereinfachung der Struktur, bzw. eine Reduzierung der Anzahl der Multiplizierer, des I/Q-Modulators erreicht werden kann.

Bevorzugte Ausführungsbeispiele der vorliegenden Erfindung sind nachfolgend unter Bezugnahme auf die beigefügten Zeichnungen näher erläutert. Es zeigen:

Fig. 1    eine prinzipielle Darstellung eines I/Q-Modulators mit Vorverzerrung des Trägersignals gemäß der Erfindung;

Fig. 2    ein erstes Ausführungsbeispiel eines digitalen I/Q-Modulators mit Vorverzerrung des Trägersignals gemäß der Erfindung;

Fig. 3    ein zweites Ausführungsbeispiel eines digitalen I/Q-Modulators mit Vorverzerrung des Trägersignals gemäß der Erfindung;

Fig. 4    eine herkömmliche Sendeeinrichtung mit einem I/Q-Modulator mit Vorverzerrung;

Fig. 5    eine prinzipielle Darstellung eines I/Q-Modulators mit Vorverzerrung des I/Q-Signals;

Fig. 6    einen herkömmlichen I/Q-Modulator mit Vorverzerrung des I/Q-Signals;

Fig. 7    eine digitale Realisierung des herkömmlichen I/Q-Modulators von Fig. 6; und

Fig. 8    eine Darstellung eines herkömmlichen numerischen Oszillators.

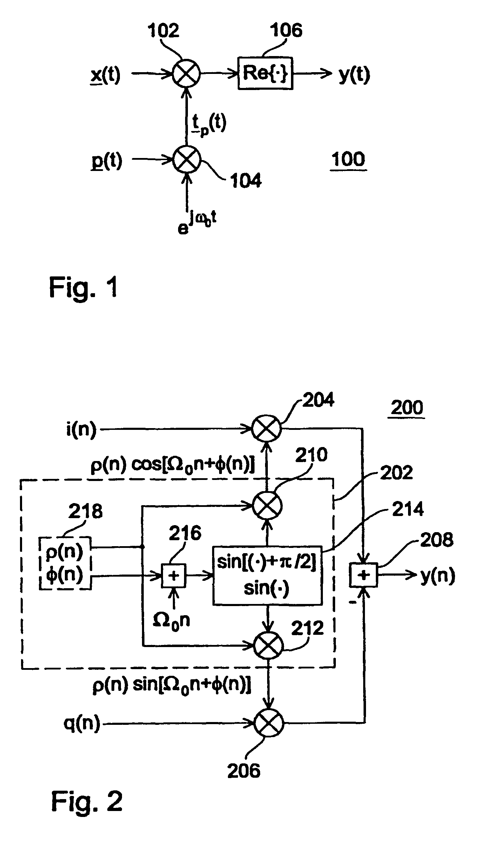

Fig. 1 zeigt eine prinzipielle Darstellung eines I/Q-Modulators mit Vorverzerrung des Trägersignals. Der I/Q-Modulator 100 umfaßt einen ersten Multiplizierer 102 mit einem ersten Eingang, an dem ein komplexes I/Q-Signal $\underline{x}(t)$ angelegt ist, einem zweiten Eingang und einem Ausgang, einen zweiten Multiplizierer 104, der einen ersten Eingang, an dem ein Vorverzerrungssignal $\underline{p}(t)$ angelegt ist, einen zweiten Eingang, an dem ein Trägersignal angelegt ist und einen Ausgang aufweist, der mit dem zweiten Eingang des ersten Multiplizierers 102 verbunden ist, und ein Glied zum Bilden des Realteils 106, das einen Eingang, der mit dem Ausgang des ersten Multiplizierers 102 verbunden ist und einen Ausgang aufweist, der das Ausgangssignal als reelles Signal y(t) liefert.

Am zweiten Eingang des zweiten Multiplizierers 104 ist das komplexe Trägersignal angelegt.

$$e^{j\omega_0 t} = \cos\omega_0 t + j\sin\omega_0 t \qquad \text{Glg. 10}$$

Dieses Trägersignal wird über das Vorverzerrungssignal

$$\underline{p}(t) = p_1(t) + jp_2(t) \qquad \text{Glg. 11}$$

das am ersten Eingang des zweiten Multiplizierers 104 anliegt und ferner polar dargestellt werden kann

$$\underline{p}(t) = \rho(t) \cdot e^{j\phi(t)} \qquad\qquad \text{Glg. 12}$$

vorverzerrt, um ein komplexes vorverzerrtes Trägersignal $\underline{t}_p(t)$ am Ausgang des zweiten Multiplizierers 104 zu erhalten.

$$\underline{t}_p(t) = \underline{p}(t) \cdot e^{j\omega_0 t} = \rho(t) \cdot e^{j[\omega_0 t + \phi(t)]} \qquad\qquad \text{Glg. 13}$$

Dieses vorverzerrte Trägersignal wird in dem ersten Multiplizierer 102 mit dem I/Q-Signal multipliziert, um das komplexe Ausgangssignal am Ausgang des ersten Multiplizierers 102 zu erzeugen. Dieses komplexe Ausgangssignal wird in das Glied 106 zum Bilden des Realteils eingespeist, um das reelle Ausgangssignal zu erhalten.

$$y(t) = \text{Re}\{\underline{x}(t) \cdot \underline{t}_p(t)\}$$

$$= i(t) \cdot \rho(t) \cdot \cos[\omega_0 t + \phi(t)] - q(t) \cdot \rho(t) \cdot \sin[\omega_0 t + \phi(t)] \qquad \text{Glg. 14}$$

Wie aus der Gleichung 14 sichtbar ist, werden zur Bestimmung des Ausgangssignals lediglich 4 Multiplikationen, d. h. 4 Multiplizierer bei einer schaltungstechnischen Realisierung, benötigt.

Bei einer digitalen Realisierung des I/Q-Modulators 100 mit Vorverzerrung des Trägersignals nach Fig. 1, werden die Signale durch Abtastwerte in einem Abstand $T_A = 1/f_A$ dargestellt. $f_A$ ist die Abtastrate, wobei $t = n \cdot T_A$ und $\Omega_0 = \text{omega}_0 \cdot T_A$. n ist dabei der Abtastparameter. Aus der Gleichung 14 folgt für das Ausgangssignal:

$$y(n) = i(n) \cdot \rho(n) \cdot \cos[\Omega_0 n + \phi(n)] - q(n) \cdot \rho(n) \cdot \sin[\Omega_0 n + \phi(n)] \qquad \text{Glg. 15}$$

Dieses Ausgangssignal kann mit Hilfe von Gleichung 13 und 14 wie folgt dargestellt werden:

$$y(n) = i(n) \cdot \text{Re}\{\underline{t}_p(n)\} - q(n) \cdot \text{Im}\{\underline{t}_p(n)\} \qquad\qquad \text{Glg. 16}$$

Fig. 2 zeigt ein erstes Ausführungsbeispiel eines digitalen I/Q-Modulators 200 mit Vorverzerrung eines Trägersignals gemäß der Erfindung. Der I/Q-Modulator 200 weist eine Vorverzerrungseinrichtung 202, einen ersten Multiplizierer 204, der einen ersten Eingang und einen zweiten Eingang und einen Ausgang aufweist, einen zweiten Multiplizierer 206, der einen ersten Eingang und einen zweiten Eingang und einen Ausgang aufweist, und einen Addierer 208 auf, der einen ersten und einen invertierenden zweiten Eingang aufweist. Der erste Ausgang der Vorverzerrungseinrichtung 202 ist mit dem ersten Eingang des ersten Multiplizierers 204 verbunden. Der zweite Ausgang der Vorverzerrungseinrichtung 202 ist mit dem ersten Eingang des zweiten Multiplizierers 206 verbunden. Der zweite Eingang des ersten Multiplizierers 204 ist ein erster Eingang des I/Q-Modulators, an dem die I-Komponente des I/Q-Signals anliegt. Der zweite Eingang des zweiten Multiplizierers 206 ist ein zweiter Eingang des I/Q-Modulators, an dem die Q-Komponente des Q-Signals anliegt. Der Ausgang des ersten Multiplizierers 204 ist mit dem ersten Eingang des Addierers 208 verbunden. Der Ausgang des zweiten Multiplizierers 206 ist mit dem zweiten Eingang des Addierers 208 verbunden. Der Ausgang des Addierers 208 bildet einen Ausgang des I/Q-Modulators 200, an dem das Ausgangssignal y(n) des I/Q-Modulators 200 geliefert wird.

An dem ersten Ausgang der Vorverzerrungseinrichtung 202 liegt eine erste vorverzerrte Teilkomponente des Trägersignals an. Am zweiten Ausgang der Vorverzerrungseinrichtung 202 liegt eine zweite vorverzerrte Teilkomponente des Trägersignals an. Der erste Multiplizierer 204 führt die erste Multiplikation des ersten Summanden der Gleichung 15 aus, während der zweite Multiplizierer 206 die erste Multiplikation des zweiten Summanden der Gleichung 15 ausführt. Die Differenz in der Gleichung 15 wird durch den Addierer 208 gebildet, um das Ausgangssignal des I/Q-Modulators zu erzeugen.

Die Vorverzerrungseinrichtung 202 von Fig. 2 weist einen ersten Multiplizierer 210, einen zweiten Multiplizierer 212, einen Oszillator 214 zum Erzeugen des Trägersignals, einen Addierer 216 und eine Einrichtung 218 zum Erzeugen des Vorverzerrungssignals auf.

Der erste Multiplizierer 210 der Vorverzerrungseinrichtung 202 weist einen ersten Eingang, der mit einem ersten Ausgang des Oszillators 214 verbunden ist, einen zweiten Eingang, der mit einem ersten Ausgang der Einrichtung 218 zum Erzeugen des Vorverzerrungssignals, an dem die Amplitude rho(n) des Vorverzerrungssignals nach Gleichung 12 anliegt, verbunden ist, und einen Ausgang auf, der den ersten Ausgang der Vorverzerrungseinrichtung 202 bildet, der die erste vorverzerrte Teilkomponente des Trägersignals liefert. Der zweite Multiplizierer 212 der Vorverzerrungseinrichtung 202 weist einen ersten Eingang, der mit dem zweiten Ausgang des Oszillators 214 verbunden ist, einen zweiten Eingang, der mit dem ersten Ausgang der Einrichtung 218 zum Erzeugen des Vorverzerrungssignals verbunden ist, und einen Ausgang auf, der den zweiten Ausgang der Vorverzerrungseinrichtung 202 bildet, der die zweite vorverzerrte Teilkomponente des Trägersignals liefert.

Der Addierer 216 der Vorverzerrungseinrichtung 202 weist einen ersten Eingang, der mit einem zweiten Ausgang der Einrichtung 218 zum Erzeugen des Vorverzerrungssignals, an dem die Phase $\phi(n)$ des Vorverzerrungssignals nach Gleichung 12 anliegt, verbunden ist, und einen zweiten Eingang auf, an dem die Phase $\Omega_0 n$ des Trägersignals angelegt ist. Ein Ausgang des Addierers 216 ist mit einem Eingang des Oszillators 214 verbunden.

Der Addierer 216 addiert zu der ursprünglichen Phase $\Omega_0 n$ des Trägersignals die Phase des Vorverzerrungssignals $\phi(n)$, die am zweiten Eingang der Einrichtung zum Erzeugen des Vorverzerrungssignals 218 geliefert wird. Damit wird die Phase des Vorverzerrungssignals in der Phase des Trägersignals berücksichtigt. Am Ausgang des Addierers 216 liegt dann eine vorverzerrte Phase des Trägersignals an und dieselbe wird in den Eingang des Oszillators 214 gespeist. Der Oszillator 214, z. B. ein numerischer Oszillator, wie in Fig. 8 gezeigt, berücksichtigt diese vorverzerrte Phase bei der Berechnung des Trägersignals, bzw. bei der Berechnung der ersten Teilkomponente und der zweiten Teilkomponente, z. B. der cos- und der sin-Komponente, des Trägersignals und liefert an dem ersten und dem zweiten Ausgang desselben eine erste und eine zweite phasenvorverzerrte Teilkomponente des Trägersignals.

In dem ersten Multiplizierer 210 der Vorverzerrungseinrichtung 202 wird die erste phasenvorverzerrte Teilkomponente des Trägersignals, die am ersten Eingang des ersten Multiplizierers 210 anliegt, mit der Amplitude rho(n) des Vorverzerrungssignals, die am zweiten Eingang des ersten Multiplizierers 210 anliegt, multipliziert, um folglich am Ausgang des ersten Multiplizierers 210 die erste vorverzerrte Teilkomponente des Trägersignals zu erhalten, die der zweite Faktor des ersten Summanden von Gleichung 15 ist.

In dem zweiten Multiplizierer 212 der vorverzerrungseinrichtung 202 wird die zweite phasenverzerrte Teilkomponente des Trägersignals, die am ersten Eingang des zweiten Multiplizierers 212 anliegt, mit der Amplitude rho(n) des Vorverzerrungssignals, die am zweiten Eingang des zweiten Multiplizierers 212 anliegt, multipliziert, um die zweite vorverzerrte Teilkomponente des Trägersignals zu erhalten, die der zweite Faktor des zweiten Summanden von Gleichung 15 ist.

Der Oszillator 214 kann ein numerischer Oszillator sein, der beispielsweise eine sin-Tabelle sein kann, die durch eine Phase, bzw. hier eine vorverzerrte Phase $\Omega_0 n + \phi(n)$ adressiert wird, um die Werte der sin-Funktion bzw. der dazu orthogonalen Funktion, hier der cos-Funktion, zu bestimmen. Der Oszillator 214 kann jeder beliebige andere Oszillator bzw. numerische Oszillator sein, der die Werte eines Trägersignals liefert, das aus einer ersten Teilkomponente und einer im wesentlichen dazu orthogonalen zweiten Teilkomponente besteht.

Die Einrichtung 218 zum Erzeugen des Vorverzerrungssignals kann beispielsweise eine Tabelle sein, die durch den Abtastparameter n adressiert wird, und die Amplitude rho(n) und die Phase $\phi(n)$ des Vorverzerrungssignals liefert. Diese Tabelle kann ferner von den Werten der I- und der Q-Komponente i(n), q(n) des I/Q-signals und auch von optionalen Parametern abhängen, die die Eigenschaften, beispielsweise einer der dem Modulator folgenden Sendeeinrichtung, z. B. eines Sendeverstärkers, wie in Fig. 4 gezeigt, beschreiben. Optionale Parameter sind z. B. die Berücksichtigung des Alters des Sendeverstärkers, die Temperatur der Umgebung, Leistungsschwankungen des Sendeverstärkers bzw. eines Systems , in das der I/Q-Modulator eingebaut ist, etc.

Die Tabelle kann dabei eine statische Tabelle sein, die vorbestimmt und gleichbleibend auf bestimmte Signalwerte der I- und der Q- Komponente des I/Q-Signals und optionale Parameter reagiert, d. h. beispielsweise ein festes Aussehen und eine feste Speichergröße aufweist und bestimmten Bedingungen zugeordnete feste Werte liefert. Die Tabelle kann jedoch auch veränderbare bzw. dynamische Werte bzw. Inhalte besitzen, die abhängig von dem Verhalten von beispielsweise dem Sendeverstärker, z. B. gegenüber Umweltbedingungen, adaptiv angepaßt werden bzw. aktualisiert werden. Eine statische Tabelle wird dabei typischerweise wesentlich größer sein als eine dynamisch sich ändernde Tabelle, die z. B. durch einen Rückführungsweg, wie in Fig. 4 gezeigt, Variationen der Sendeeinrichtung automatisch berücksichtigt. Die dynamische Tabelle benötigt folglich keine Vorkenntnisse über das jeweilige System, in das der I/Q-Modulator eingebaut ist, und kann daher kleiner sein.

Ein Nachteil einer dynamischen adaptiven Vorverzerrung besteht jedoch in dem großen Aufwand für eine notwendige Rückführung, wie in Fig. 4 gezeigt, die sehr genau und wenig verzerrend arbeiten sollte. Ein möglicher Kompromiß besteht daher in einer statischen Tabelle, die nur die Werte der I- und der Q-Komponente und wenige optionale Parameter, typischerweise die Umgebungstemperatur des Systems, in das der I/Q-Modulator eingebaut ist, berücksichtigt. Eine derartige Tabelle ist mit weniger Aufwand realisierbar.

Fig. 3 zeigt ein zweites Ausführungsbeispiel eines digitalen I/Q-Modulators 300 mit Vorverzerrung des Trägersignals gemäß der Erfindung. Die Vorverzerrungseinrichtung ist nun eine Vorverzerrungseinrichtung 302, die gesamt aus einer Tabelle besteht, da alle Funktionen der Vorverzerrungseinrichtung 202 von Fig. 2 in einer Tabelle integriert werden können, die mindestens durch den Abtastparameter n bzw. die Phase $\Omega_0 n$ adressierbar ist.

Der Vorteil besteht darin, daß lediglich 2 Multiplizierer für die Realisierung des digitalen I/Q-Modulators mit Vorverzerrung benötigt werden, was ein Drittel der Anzahl der Multiplizierer des herkömmlichen I/Q-Modulators nach Fig. 7 darstellt. Der I/Q-Modulator 300 weist ähnlich zu Fig. 2 ferner einen ersten Multiplizierer 304, einen zweiten Multiplizierer 306 und einen Addierer 308 auf, die die identische Funktion zu dem ersten Multiplizierer 204, dem zweiten Multiplizierer 206 und dem Addierer 208 von Fig. 2 besitzen.

In Fig. 3 ist gezeigt, daß die Vorverzerrungseinrichtung 302, hier eine Tabelle, außer durch die Phase $\Omega_0 n$ ferner durch die I-Komponente und die Q-Komponente des I/Q-Signals und durch optionale Parameter a adressiert werden kann. Dies berücksichtigt einerseits die Abhängigkeit der Vorverzerrung von der Amplitude des I/Q-Signals bzw. den Amplituden der Teilkomponenten desselben und andererseits von optionalen Parametern, wie z. B. eines Sendeverstärkers, wie in Fig. 4 gezeigt, die z. B. das Altern des Sendeverstärkers, die Temperatur der Umgebung, in der der I/Q-Modulator eingebaut ist, Leistungsschwankungen des Sendeverstärkers und andere Bedingungen angegeben. Das Vorverzerrungssignal bzw. die Tabelle ist durch folgende Gleichung beschreibbar:

$$\underline{t}_p(n) = \underline{p}(n) \cdot e^{j\Omega_0 n} = \underline{p}[\underline{x}(n), \alpha] \cdot e^{j\Omega_0 n} = \underline{t}_p[i(n), q(n), \alpha, \Omega_0 n] \qquad \text{Glg. 17}$$

In Fig. 3 ist die Tabelle als eine statische Tabelle dargestellt, in der bestimmte Zustände des Systems, in das der I/Q-Modulator integriert ist, berücksichtigt sind. Die Tabelle kann jedoch ferner zur adaptiven Vorverzerrung des I/Q-Signals verwendet werden, indem beispielsweise die Inhalte der Tabelle aufgrund eines Vergleichs des ursprünglichen I/Q-Signals mit dem tatsächlich durch eine Sendeeinrichtung gelaufenen I/Q-Signal, wie z. B. in Fig. 4 gezeigt, dynamisch geändert werden. Dies macht die Tabelle z. B. lediglich von der Amplitude des I/Q-Signals abhängig und macht daher nur eine kleine Tabelle erforderlich. Bei Berücksichtigung von vielen Parametern in einer statischen Tabelle ist hingegen eine sehr große Tabelle notwendig.

Der Vorteil einer statischen Tabelle besteht jedoch darin, daß im Vergleich zu einem aufwendigen Rückkopplungsweg, wie in Fig. 4 gezeigt, der sehr genau arbeiten muß, also z. B. nicht verzerrend sein sollte, hohe Kosten vermieden werden.

Die vorliegende Erfindung realisiert einen I/Q-Modulator mit Vorverzerrung des Trägersignals, der einen wesentlich vereinfachten Aufbau gegenüber einem herkömmlichen I/Q-Modulator mit Vorverzerrung des I/Q-Signals bzw. des Basisbandsignals besitzt, das heißt lediglich bis zu einem Drittel der Anzahl an Multiplizierern und folglich eine niedrigere Gatteranzahl und einen niedrigeren Leistungsverbrauch aufweist.

**Patentansprüche**

1.  I/Q-Modulator (200; 300) zum Verarbeiten eines I/Q-Signals, um ein vorverzerrtes Ausgangssignal zu erhalten, wobei das I/Q-Signal eine I-Komponente und eine Q-Komponente aufweist, mit folgenden Merkmalen:

    -   einer Vorverzerrungseinrichtung (202; 302) zum Vorverzerren eines Trägersignals, das eine erste Teilbmpo-nente und einer zur ersten Teilkomponente im wesentlichen orthogonale zweite Teilkomponente aufweist, mit einem Vorverzerrungssignal, um eine erste und eine zweite vorverzerrte Teilkomponente des Trägersignals zu erhalten, wobei das Vorverzerrungssignal von der I-Komponente und der Q-Komponente abhängt;

    -   einem ersten Multiplizierer (204; 304) zum Multiplizieren der I-Komponente mit der ersten vorverzerrten Teilkomponente, um eine multiplizierte I-Komponente zu erhalten;

    -   einem zweiten Multiplizierer (206; 306) zum Multiplizieren der Q-Komponente mit der zweiten vorverzerrten Teilkomponente, um eine multiplizierte Q-Komponente zu erhalten;

    -   einem Addierer (208; 308) zum Addieren der multiplizierten I-Komponente und der negativen multiplizierten Q-Komponente, um das vorverzerrte Ausgangssignal zu erhalten.

2.  I/Q-Modulator (200; 300) gemäß Anspruch 1, bei dem die Vorverzerrungseinrichtung (202; 302) folgende Merkmale aufweist:

    -   eine Einrichtung (218) zum Erzeugen des Vorverzerrungssignals, die den Betrag des Vorverzerrungssignals und die Phase des Vorverzerrungssignals liefert;

- einen Oszillator (214) zum Erzeugen des Trägersignals, der einen Eingang, an den die Phase des Trägersignals angelegt ist, einen ersten Ausgang, der die erste Teilkomponente des Trägersignals liefert, und einen zweiten Ausgang aufweist, der die zweite Teilkomponente des Trägersignals liefert;

- einen Addierer (216) zum Addieren der Phase des Vorverzerrungssignals zu einer ursprünglichen Phase des Trägersignals, um die Phase des vorverzerrten Trägersignals zu bestimmen;

- einen ersten Multiplizierer (210) zum Multiplizieren des Betrags des Vorverzerrungssignals mit der ersten Teilkomponente des Trägersignals, um die erste vorverzerrte Teilkomponente des Trägersignals zu erzeugen; und

- einen zweiten Multiplizierer (212) zum Multiplizieren des Betrags des Vorverzerrungssignals mit der zweiten Teilkomponente des Trägersignals, um die zweite vorverzerrte Teilkomponente des Trägersignals zu erzeugen.

3. I/Q-Modulator (200; 300) gemäß Anspruch 1 oder 2, bei dem das I/Q-Signal, das Trägersignal und das Vorverzerrungssignal zeitdiskrete Signale sind, die jeweils eine Funktion eines Abtastparameters sind.

4. I/Q-Modulator (200) gemäß Anspruch 3, bei dem der Oszillator (214) ein numerischer Oszillator ist, der folgendes Merkmal aufweist:

- eine Tabelle zum Liefern der Werte der ersten Teilkomponente und der zweiten Teilkomponente des Trägersignals in Abhängigkeit von der Phase des Trägersignals.

5. I/Q-Modulator (300) gemäß Anspruch 3, bei dem die Vorverzerrungseinrichtung (302) eine Tabelle zum Liefern der ersten und der zweiten vorverzerrten Teilkomponente des Trägersignals in Abhängigkeit von mindestens der I- und der Q-Komponente des I/Q-Signals und der Phase des Trägersignals ist.

6. I/Q-Modulator (300) gemäß Anspruch 5, bei dem die Werte der ersten und der zweiten vorverzerrten Teilkomponente des Trägersignals in der Tabelle von mindestens einem weiteren Parameter abhängen.

7. I/Q-Modulator (300) gemäß Anspruch 6,
bei dem der I/Q-Modulator (300) mit einer verzerrenden Einrichtung (408) verbindbar ist, so daß das Ausgangssignal des I/Q-Modulators (300) durch die verzerrende Einrichtung (408) laufen kann, und
wobei der mindestens eine weitere Parameter Eigenschaften beschreibt, die zu der Verzerrung des I/Q-Signals in der verzerrenden Einrichtung (408) beitragen.

8. I/Q-Modulator gemäß Anspruch 7, bei dem der mindestens eine Parameter die temperaturabhängigen, die altersbedingten oder die leistungsschwankungsbedingten Eigenschaften der verzerrenden Einrichtung (408) beschreibt.

9. I/Q-Modulator (300) gemäß Anspruch 7 oder 8, wobei die verzerrende Einrichtung (408), die mit dem I/Q-Modulator verbindbar ist, eine Sendeeinrichtung ist, die einen verzerrenden Sendeverstärker aufweist.

10. I/Q-Modulator gemäß einem der vorhergehenden Ansprüche, der mit einer Vergleichseinrichtung (420) verbindbar ist, durch die das in den I/Q-Modulator (200; 300) eingespeiste I/Q-Signal oder das aus dem I/Q-Modulator (200; 300) kommende vorverzerrte I/Q-Signal mit einem Ausgangssignal einer verzerrenden Einrichtung (408), in die das vorverzerrte Ausgangssignal des I/Q-Modulators einspeisbar ist, vergleichbar ist,
wobei die Vorverzerrungseinrichtung (202; 302) ausgebildet ist, daß das Vorverzerrungssignal durch die Vergleichseinrichtung (420) derart einstellbar ist, daß die Verzerrung des I/Q-Signals durch die verzerrende Einrichtung (408) kompensiert wird.

11. Verfahren zum Verarbeiten eines I/Q-Signals, um ein vorverzerrtes Ausgangssignal zu erhalten, wobei das I/Q-Signal eine I-Komponente und eine Q-Komponente aufweist, mit folgenden Schritten:

- Vorverzerren eines Trägersignals, das eine erste Teilkomponente und eine zur ersten Teilkomponente im wesentlichen orthogonale zweite Teilkomponente aufweist, mit einem Vorverzerrungssignal, um eine erste und eine zweite vorverzerrte Teilkomponente des Trägersignals zu erhalten, wobei das Vorverzerrungssignal von der I-Komponente und der Q-Komponente abhängt;

- Multiplizieren der I-Komponente mit der ersten vorverzerrten Teilkomponente, um eine multiplizierte I-Komponente zu erhalten;

- Multiplizieren der Q-Komponente mit der zweiten vorverzerrten Teilkomponente, um eine multiplizierte Q-Komponente zu erhalten; und

- Addieren der multiplizierten I-Komponente und der negativen multiplizierten Q-Komponente, um das vorverzerrte Ausgangssignal zu erhalten.

**Claims**

1. An I/Q modulator (200; 300) for processing an I/Q signal so as to obtain a predistorted output signal, said I/Q signal having an I component and a Q component, comprising:

   - a predistortion means (202; 302) for predistorting with a predistortion signal a carrier signal, which comprises a first subcomponent and a second subcomponent that is substantially orthogonal to said first subcomponent, so as to obtain a first and a second predistorted subcomponent of the carrier signal, said predistortion signal depending on the I component and the Q component;

   - a first multiplier (204; 304) for multiplying the I component by the first predistorted subcomponent so as to obtain a multiplied I component;

   - a second multiplier (206; 306) for multiplying the Q component by the second predistorted subcomponent so as to obtain a multiplied Q component;

   - an adder (208; 308) for adding the multiplied I component and the negative multiplied Q component so as to obtain the predistorted output signal.

2. An I/Q modulator (200; 300) according to claim 1, wherein the predistortion means (202; 302) comprises:

   - a means (218) for producing the predistortion signal which supplies the magnitude of the predistortion signal and the phase of the predistortion signal;

   - an oscillator (214) for producing the carrier signal, which comprises an input having the phase of the carrier signal applied thereto, a first output supplying the first subcomponent of the carrier signal, and a second output supplying the second subcomponent of the carrier signal;

   - an adder (216) for adding the phase of the predistortion signal to an original phase of the carrier signal so as to determine the phase of the predistorted carrier signal;

   - a first multiplier (210) for multiplying the magnitude of the predistortion signal by the first subcomponent of the carrier signal so as to produce the first predistorted subcomponent of the carrier signal; and

   - a second multiplier (212) for multiplying the magnitude of the predistortion signal by the second subcomponent of the carrier signal so as to produce the second predistorted subcomponent of the carrier signal.

3. An I/Q modulator (200; 300) according to claim 1 or 2, wherein the I/Q signal, the carrier signal and the predistortion signal are time-discrete signals which are each a function of a sampling parameter.

4. An I/Q modulator (200) according to claim 3, wherein the oscillator (214) is a numeric oscillator comprising:

   - a table for supplying the values of the first subcomponent and of the second subcomponent of the carrier signal in dependence upon the phase of the carrier signal.

5. An I/Q modulator (300) according to claim 3, wherein the predistortion means (302) is a table for supplying the first and second predistorted subcomponents of the carrier signal in dependence upon at least the I component and the Q component of the I/Q signal and the phase of the carrier signal.

**6.** An I/Q modulator according to claim 5, wherein the values of the first and second predistorted subcomponents of the carrier signal in said table depend on at least one additional parameter.

**7.** An I/Q modulator (300) according to claim 6,
wherein the I/Q modulator (300) is connectable to a distorting means (408) such that the output signal of the I/Q modulator (300) may pass through the distorting means (408), and
wherein the at least one additional parameter describes properties which contribute to the distortion of the I/Q signal in the distorting means (408).

**8.** An I/Q modulator according to claim 7, wherein the at least one parameter describes the temperature-dependent or the age-dependent properties of a distorting means (408) or the properties of a distorting means which depend on power variations.

**9.** An I/Q modulator (300) according to claim 7 or 8, wherein the distorting means (408) which is connectable to the I/Q modulator is a transmitting means including a distorting transmitter amplifier.

**10.** An I/Q modulator according to one of the preceding claims, connectable to a comparing means (420) by means of which the I/Q signal fed to the I/Q modulator (200; 300) or the predistorted I/Q signal coming from the I/Q modulator (200; 300) is comparable with an output signal of a distorting means (408) fed with the predistorted output signal of the I/Q modulator,
wherein the predistortion means (202; 302) is formed such that the predistortion signal is adjustable by the comparing means (420) such that the distortion caused in the I/Q signal by the distorting means (408) is compensated for.

**11.** A method of processing an I/Q signal so as to obtain a predistorted output signal, said I/Q signal having an I component and a Q component, said method comprising the following steps:

- predistorting with a predistortion signal a carrier signal, which comprises a first subcomponent and a second subcomponent that is substantially orthogonal to said first subcomponent, so as to obtain a first and a second predistorted subcomponent of the carrier signal, said predistortion signal depending on the I component and the Q component;

- multiplying the I component by the first predistorted subcomponent so as to obtain a multiplied I component;

- multiplying the Q component by the second predistorted subcomponent so as to obtain a multiplied Q component; and

- adding the multiplied I component and the negative multiplied Q component so as to obtain the predistorted output signal.

**Revendications**

**1.** Modulateur I/Q (200 ; 300) destiné à traiter un signal I/Q, pour obtenir un signal de sortie prédistorsionné, le signal I/Q présentant une composante I et une composante Q, aux caractéristiques suivantes :

- un dispositif de prédistorsion [202; 302) destiné à prédistorsionner un signal de porteuse présentant une première composante partielle et une deuxième composante partielle sensiblement orthogonale à la première composante partielle par un signal de prédistorsion, pour obtenir une première et une deuxième composante partielle prédistorsionnée du signal de porteuse, le signal de prédistorsion étant fonction de la composante I et de la composante Q ;
- un premier multiplicateur (204 ; 304) destiné à multiplier la composante I par la première composante partielle prédistorsionnée, pour obtenir une composante I multipliée ;
- un deuxième multiplicateur (206 ; 306) destiné à multiplier la composante Q par la deuxième composante partielle prédistorsionnée, pour obtenir une composante Q multipliée ;
- un additionneur (208 ; 308) destiné à additionner la composante I multipliée et la composante Q multipliée négative, pour obtenir le signal de sortie prédistorsionné.

**2.** Modulateur I/Q (200 ; 300) selon la revendication 1, dans lequel le dispositif de prédistorsion (202 ; 302) présente les caractéristiques suivantes :

- un dispositif (218) destiné à générer le signal de prédistorsion qui fournit la valeur et la phase du signal de prédistorsion ;
- un oscillateur (214) destiné à générer le signal de porteuse, présentant une entrée à laquelle est appliquée la phase du signal de porteuse, une première sortie fournissant la première composante partielle du signal de porteuse, et une deuxième sortie fournissant la deuxième composante partielle du signal de porteuse ;
- un additionneur (216) destiné à additionner la phase du signal de prédistorsion à une phase originale du signal de porteuse, pour déterminer la phase du signal de porteuse prédistorsionné ;
- un premier multiplicateur (210) destiné à multiplier la valeur du signal de prédistorsion par la première composante partielle du signal de porteuse, pour générer la première composante partielle prédistorsionnée du signal de porteuse ; et
- un deuxième multiplicateur (212) destiné à multiplier la valeur du signal de prédistorsion par la deuxième composante partielle du signal de porteuse, pour générer la deuxième composante partielle du signal de porteuse.

**3.** Modulateur I/Q (200 ; 300) selon la revendication 1 ou 2, dans lequel le signal I/Q, le signal de porteuse et le signal de prédistorsion sont des signaux discrets dans le temps qui sont, chacun, fonction d'un paramètre de balayage.

**4.** Modulateur I/Q (200) selon la revendication 3, dans lequel l'oscillateur (214) est un oscillateur numérique présentant la caractéristique suivante :

- un tableau destiné à fournir les valeurs de la première composante partielle et de la deuxième composante partielle du signal de porteuse en fonction de la phase du signal de porteuse.

**5.** Modulateur I/Q (300) selon la revendication 3, dans lequel le dispositif de prédistorsion (302) est un tableau destiné à fournir la première et la deuxième composante partielle prédistorsionnée du signal de porteuse en fonction d'au moins la composante I et la composante Q du signal I/Q et de la phase du signal de porteuse.

**6.** Modulateur I/Q (300) selon la revendication 5, dans lequel les valeurs de la première et de la deuxième composante partielle prédistorsionnée du signal de porteuse dans le tableau dépendent d'au moins un autre paramètre.

**7.** Modulateur I/Q (300) selon la revendication 6,
dans lequel le modulateur I/Q (300) peut être relié à un dispositif de distorsion (408), de sorte que le signal de sortie du modulateur I/Q (300) puisse passer à travers le dispositif de distorsion (408), et
l'au moins un autre paramètre décrivant des propriétés qui contribuent à la distorsion du signal I/Q dans le dispositif de distorsion (408).

**8.** Modulateur I/Q selon la revendication 7, dans lequel l'au moins un paramètre décrit les propriétés fonction de la température, conditionnées par l'âge ou conditionnées par les variations de puissance du dispositif de distorsion (408).

**9.** Modulateur I/Q (300) selon la revendication 7 ou 8, dans lequel le dispositif de distorsion (408) pouvant être relié au modulateur I/Q est un dispositif émetteur présentant un amplificateur d'émission à distorsion.

**10.** Modulateur I/Q selon l'une des revendications précédentes, pouvant être relié à un dispositif comparateur (420) par lequel le signal I/Q alimenté vers le modulateur I/Q (200 ; 300) ou le signal I/Q prédistorsionné provenant du modulateur I/Q (200 ; 300) peut être comparé à un signal de sortie d'un dispositif de distorsion (408) vers lequel peut être alimenté le signal de sortie prédistorsionné du modulateur I/Q,
le dispositif de prédistorsion (202 ; 302) étant réalisé de sorte que le signal de prédistorsion puisse être réglé par le dispositif comparateur (4201) de sorte que soit compensée la distorsion du signal I/Q par le dispositif de distorsion (408).

**11.** Procédé pour traiter un signal I/Q, pour obtenir un signal de sortie prédistorsionné, le signal I/Q présentant une composante I et une composante Q, aux étapes suivantes consistant à :

- prédistorsionner un signal de porteuse présentant une première composante partielle et une deuxième composante partielle sensiblement orthogonale à la première composante partielle par un signal de prédistorsion, pour obtenir une première et une deuxième composante partielle prédistorsionnée du signal de porteuse, le signal de prédistorsion étant fonction de la composante I et de la composante Q ;

- multiplier la composante I par la première composante partielle prédistorsionnée, pour obtenir une composante I multipliée ;
- multiplier la composante Q par la deuxième composante partielle prédistorsionnée, pour obtenir une composante Q multipliée ; et
- additionner la composante I multipliée et la composante Q multipliée négative, pour obtenir le signal de sortie prédistorsionné.

EP 1 264 459 B1

Fig. 1

Fig. 2

14

Fig. 3

Fig. 4

**Fig. 5**

**Fig. 6**

Fig. 7

Fig. 8